# EUROPÄISCHE PATENTSCHRIFT

(11) **EP 0 592 981 B1**
(45) Veröffentlichungstag und Bekanntmachung des Hinweises auf die Patenterteilung: **04.04.2001**
(21) Anmeldenummer: 93116413.1
(22) Anmeldetag: 11.10.1993
(51) Int. Cl.: B23Q 11/00, B24D 5/00

(54) **Exzentrisch gelagerte, auf Gegengewichte ausgewuchtete Werkzeuge zum Bearbeiten von Mineralien**
Oscillating tools tuned by counterweights
Outils oscillants et balancés au moyen de contre-poids

(30) Priorität: 14.10.1992 CH 321492
(43) Veröffentlichungstag der Anmeldung: 20.04.1994
(73) Patentinhaber: Bechem, Hannelore, D-58093 Hagen (DE)
(72) Erfinder: Bechem, Klaus, D-58093 Hagen (DE); Bechem, Philip, D-58093 Hagen (DE); Bechem, Ulrich, D-58093 Hagen (DE)

(56) Entgegenhaltungen:
- EP-A- 0 268 753
- DE-U- 9 015 579
- NL-A- 7 807 955
- US-A- 3 280 865

## Beschreibung

Es gibt diverse Systeme zur Überlagerung von Schlagimpulsen beim Bohren, Fräsen, Schlitzen und dgl. - sie alle haben u.a. den Vorteil, daß sie nur noch minimale Anpresskräfte erfordern - d.h. u.a., daß mit wesentlich leichteren / wirtschaftlicheren Maschinen gearbeitet werden kann. Die DE-U- 90 15 579 zeigt ein Verfahren mit den Merkmalen des Oberbegriffs des Anspruchs 1. Das Verfahren mit den Merkmalen des Anspruchs 1 - in der Beschreibung in Ausführungsbeispielen beschrieben und skizziert - bringt bei dieser Exzenterschlagüberlagerung den großen Vorteil, daß die zur Auswuchtung erforderlichen Gegengewichte nicht auf die jeweiligen Werkzeuge justiert, ein-/nachgestellt werden müssen - was an der Betriebsstelle fast undurchführbar ist - sondern daß die entsprechenden Werkzeuge vor dem Einsatz auf das Aggregat resp. die Gegengewichte abgestimmt / ausgewuchtet wurden.-Die zur Schlagüberlagerung schnell drehend angetriebene Exzenterwelle kann ein- oder zweiseitig gehalten sein, die Werkzeuge können ohne Antrieb - langsam selbständig drehen oder gesondert langsam drehend angetrieben sein. Der Werkzeugträger, vorzugsweise eine ein- oder zweiteilige auswechselbare Hülse kann selbst das Werkzeug sein oder wird mit Werkzeugen ausgerüstet - vorzugsweise mit auswechselbaren.

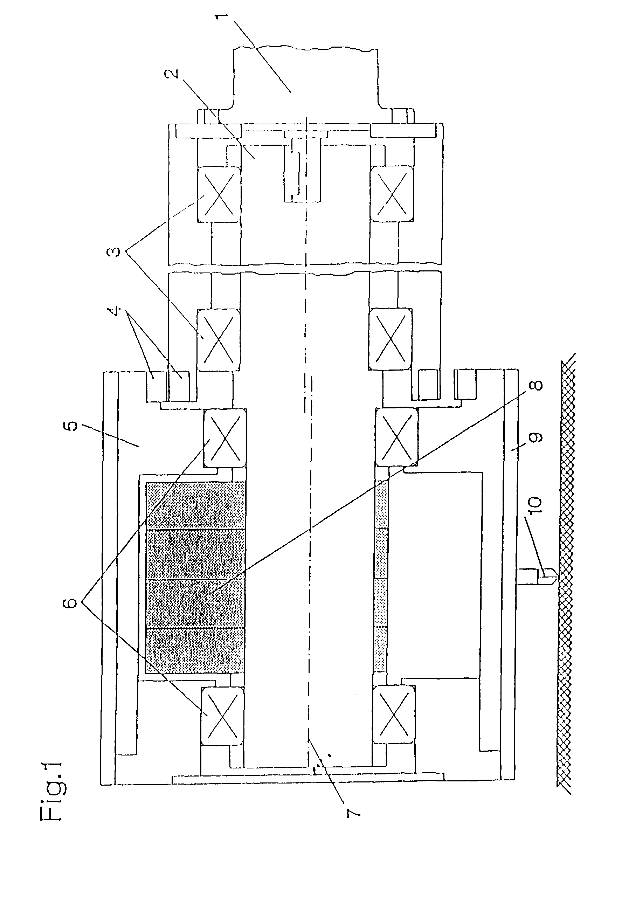

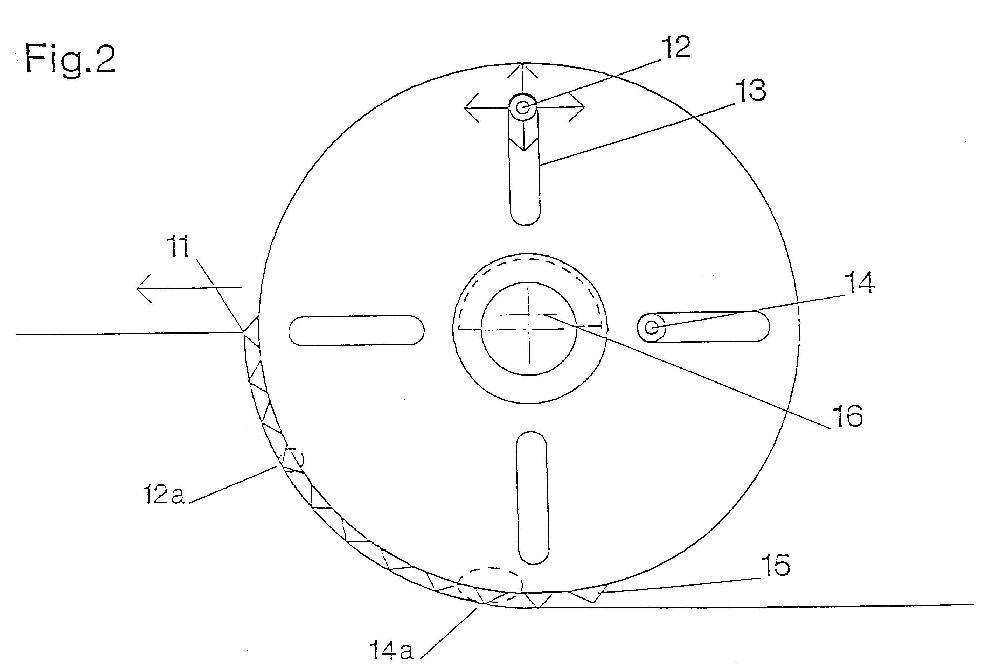

Das in Figur 1 dargestellte Aggregat mit einem Werkzeugdurchmesser von 300mm, einer Breite von 300mm wird z.B.-mit 20 - 30 Fräswerkzeugen ausgerüstet - von einem 4-5kw Motor mit 3.000 U/min angetrieben. Das in dieser Ausführung verwendete Untersetzungsgetriebe bringt das Werkzeug bei einer Amplitude von 5mm auf ca. 150 U/min. - jede andere Antriebsart kann gewählt werden.-Ohne Antrieb dreht das Werkzeug durch Abrollen auf dem Boden selbständig, ebenfalls mit ca. 150 U/min., entgegengesetzt zur Exzenterdrehrichtung. - Der extreme Schlageffekt = Löseleistung bei geringstem Andruck resultiert aus den mit hohen Drehzahlen umlaufenden exzentrischen Massen - die Laufruhe aus der Gegenwuchtung. In der Figur 2 ist 11 ein schlitzend- oder flächig abtragendes Fräswerkzeug. 12 ist ein am Gehäuse / Halter festmontierter oder in allen Richtungen verschiebbarer / bewegbarer Bolzen oder dgl., der in einer Führung 13 gleitet. Die jeweiligen Bolzen sind mit der Halterung der Exzenteraktivierung 16 fest verbunden, um das oszillierende Arbeiten der Werkzeuge 11, 12a und 14a zu gewährleisten. Der Bolzen in Stellung 12 erzeugt die kleinere Radialbewegung der Zähne 15 - der Bolzen 14 die größere. 16 ist die Exzenteraktivierung mit Gegengewicht auf die die Werkzeuge 11 montiert werden. Der Festpunkt kann natürlich auch außerhalb des eigentlichen Wellzeuges liegen z.B., wenn das Werkzeug aus Platzgründen nur halbkreisförmig oder sonstwie ausgebildet ist; der Bolzen kann auch hin und her oder radial bewegt werden. Das entsprechende Aggregat kann - entspr. ausgebildet - auch zum Verdichten eingesetzt werben - mit Eigenvortrieb variabler Geschwindigkeiten.

Mit 16 ist die ausgewuchtete Exzenteraktivierung nur angedeutet - sie entspricht der in Figur 1, jedoch ohne Drehantrieb 4. Die Bolzen 12 und 14 bestimmen die Größe der Kreisbewegung der Werkzeuge 15 - wobei jeweils nur der eine oder der andere aktiv ist d.h. im Schlitz 13 arbeitet. Durch das in beliebiger Weise Hin und Her oder kreisendem Bewegen des Bolzens wird ein zusätzliches Pendeln der Werkzeuge 15 erzeugt - dies kann erforderlich werden, wenn sich die Werkzeuge auf der Stelle einarbeiten sollten. Ohne Änderung der Exzenteramplitude 7, Figur 1 sind die Kreisbewegungen des Werkzeuges 12a beim Festhaltepunkt / Bolzen 12 kleiner als die bei ßolzen 14 d.h. Kreisbewegung 14a.

## Patentansprüche

1. Verfahren zum Auswuchten eines Aggregats zum Bohren, Fräsen, Schlitzen und Verdichten von Materialien, bei dem ein Werkzeugträger (5) mit mindestens einem Werkzeug (10) auf einem motorisch angetriebenem Exzenter (7) gelagert ist, wobei mindestens ein Lager (6) frei drehend zwischen Exzenter (7) und Werkzeugträger (5) angeordnet ist, dadurch gekennzeichnet, daß zunächst Gegengewichte (8) montiert werden, dann das mindestens eine Werkzeug (10) auf die Gegengewichte (8) abgestimmt und/oder ausgewuchtet wird und schließlich das mindestens eine, abgestimmte und/oder ausgewuchtete Werkzeug (10) an dem Aggregat angebracht wird.

2. Verfahren nach Anspruch 1, dadurch gekennzeichnet, daß eine die Werkzeuge Lägende Hülse (9) und das oder die Werkzeuge (10) auf die Gegengewichte (8) abgestimmt und/oder ausgewuchtet werden und anschließend an dem Aggregat (10) angebracht werden.

3. Verfahren nach Anspruch 1 oder 2, dadurch gekennzeichnet, daß die auf das Gegengewicht (8) abgestimmten und ausgewuchteten Werkzeuge (10) zum Bohren, Fräsen, Schlitzen oder Verdichten auf einem Aggregat austauschbar sind.

4. Verfahren nach mindestens einem der Ansprüche 1 bis 3, dadurch gekennzeichnet, daß der Werkzeugträger (5) mit einem Festpunkt im Abstand von der Exzenterachse angeordnet wird, z. B. über (12) oder (14), und das Werkzeug (11, 12a, 14a) dadurch im Betrieb eine Radial- und Pendelbewegung bezogen auf die Exzenterachse ausführt.

5. Verfahren nach Anspruch 4, dadurch gekennzeichnet, daß der Festpunkt (12, 14) durch Verschieben in einer Führung (13) einstellbar ist.

6. Verfahren nach Anspruch 5, dadurch gekennzeichnet, daß der Festpunkt (12, 14) radial oder linear verschiebbar ist.

7. Verfahren nach einem der vorangehenden Ansprüche, dadurch gekennzeichnet, daß das Aggregat dynamisch auswuchtbar ist.

## Claims

1. A method for balancing a unit for drilling, milling, slitting and compression of materials, in which a tool holder (5) having at least one tool (10) is mounted on a motor-driven eccentric (7), wherein at least one bearing (6) is arranged so as to rotate freely between eccentric (7) and tool holder (5), characterised in that first of all counterweights (8) are mounted, then the at least one tool (10) is adjusted and/or balanced with respect to the counterweights (8) and finally the at least one adjusted and/or balanced tool (10) is mounted on the unit.

2. A method according to claim 1, characterised in that a sleeve (9) carrying the tools and the tool or tools (10) are adjusted and/or balanced with respect to the counterweights (8) and are subsequently mounted on the unit (10).

3. A method according to claim 1 or 2, characterised in that the tools (10) for drilling, milling, slitting or compression on a unit and adjusted and balanced with respect to the counterweight (8) are exchangeable.

4. A method according to at least one of claims 1 to 3, characterised in that the tool holder (5) is arranged with a fixed point spaced from the eccentric axis, for example by way of (12) or (14), and consequently in operation the tool (11,12a, 14a) performs a radial and oscillating movement in relation to the eccentric axis.

5. A method according to claim 4, characterised in that the fixed point (12,14) is adjustable by displacement in a guide (13).

6. A method according to claim 5, characterised in that the fixed point (12, 14) is radially or linearly displaceable.

7. A method according to any one of the preceding claims, characterised in that the unit is arranged to be dynamically balanced.

## Revendications

1. Procédé d'équilibrage d'un groupe de perçage, fraisage, rainurage et de compression de matériaux, dans lequel est logé un porte-outils (5) comportant au moins un outil (10) sur un excentrique (7) entraîné par moteur, au moins un palier (6) étant disposé en rotation libre entre l'excentrique (7) et le porte-outils (5), caractérisé en ce que des contrepoids (8) sont d'abord montés, puis en ce que au moins un outil (10) est adapté et/ou équilibré en fonction des contrepoids (8) et enfin qu'au moins un outil (10) adapté ou équilibré est monté sur le groupe.

2. Procédé selon la revendication 1, caractérisé en ce que le manchon (9) supportant les outils et que le ou les outils (10) sont adaptés et/ou équilibrés en fonction des contrepoids (8) puis montés ensuite sur le groupe (10).

3. Procédé selon la revendication 1 ou 2, caractérisé en ce que les outils (10) de perçage, fraisage, rainurage ou de compression adaptés ou équilibrés en fonction du contrepoids (8) sont interchangeables sur un groupe.

4. Procédé selon au moins l'une des revendications 1 à 3, caractérisé en ce que le porte-outils (5) est disposé avec un point fixe à distance de l'axe de l'excentrique, par ex. au moyen de (12) ou de (14) et que l'outil (11, 12a, 14a) exécute ainsi en service un mouvement radial et pendulaire par rapport à l'axe de l'excentrique.

5. Procédé selon la revendication 4, caractérisé en ce que le point fixe (12, 14) est réglable par déplacement dans un guidage (13).

6. Procédé selon la revendication 5, caractérisé en ce que le point fixe (12, 14) est déplaçable radialement ou linéairement.

7. Procédé selon l'une des revendications précédentes, caractérisé en ce que le groupe peut être équilibré de manière dynamique.
